# EUROPEAN PATENT SPECIFICATION

(11) **EP 1 662 375 B1**
(45) Date of publication and mention of the grant of the patent: **02.01.2008**
(21) Application number: 04028373.1
(22) Date of filing: 30.11.2004
(51) Int. Cl.: G06F 7/58

(54) **Random number generator and method for testing the generator**
Zufallszahlengenerator und Methode zum Testen des Generators
Générateur de nombres aléatoires et méthode pour tester le générateur

(43) Date of publication of application: 31.05.2006
(73) Proprietor: Infineon Technologies AG, 81669 München (DE)
(72) Inventor: Luzzi, Raimondo, Dr., 8010 Graz (AT); Bucci, Marco, 8020 Graz (AT)
(74) Representative: Epping - Hermann - Fischer

(56) References cited:
- EP-A- 1 447 740
- GB-A- 2 064 184
- US-A- 6 061 703

## Description

A random number generator is a system whose output consists of random numbers. Random numbers are used for example in challenge-response protocols, as initialization vectors, for the generation of signature key pairs and random padding bits in various applications such as smart cards. Random number generators can be grouped into pseudo-random number generators and true random number generators.

Pseudo-random number generators are given an initial value, the so called "seed", by an external source and use state functions to calculate a sequence of internal states. The random numbers generated are usually uniformly distributed. However, given the complete knowledge of the generator structure and previously generated sequences of random numbers, it is possible to predict the following random numbers. The overall entropy of the random numbers generated lies in the initial value and cannot exceed the entropy of the seed. Pseudo-random number generators are suitable for applications which only require uniformly distributed numbers.

In contrast, true random number generators are used in security applications where the unpredictability of the random number is a key requirement. True random number generators are based on non-deterministic phenomena that act as the source of randomness. Of the non-deterministic sources available usually only electronic noises and time jitter are suitable for integrated circuit implementations. Such hardware implemented random number generator can produce random numbers at a very fast rate. However, the statistical quality of the random numbers generated is limited due to bandwidth limitation, fabrication tolerances, aging and temperature drifts in the non-deterministic noise sources commonly used. To improve the statistical quality the non-deterministic noise source is usually followed by a digital post-processing device.

Such a random number generator is described in UK Patent Application GB 2064184 A.

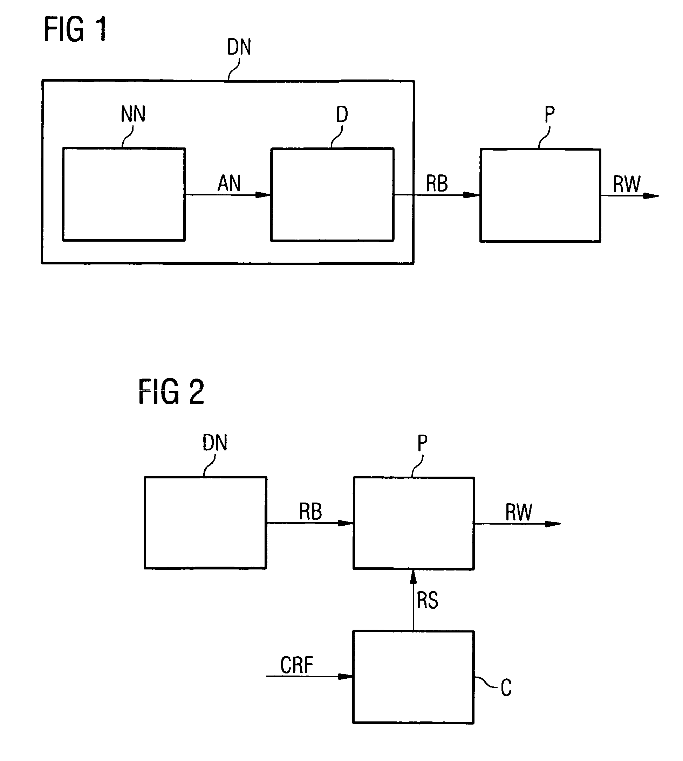

Figure 1 shows the architecture of such a random number generator. A non-deterministic noise source NN based on some kind of stochastic phenomena produces an analog noise signal AN which is input into a digitizer D. The digitizer D samples the analog noise signal AN and converts the sampled values into a stream of random bits RB. The non-deterministic noise source NN and the digitizer D together form the digitized noise source DN. The random bits RB are then fed into a post-processing unit P which then produces a stream of random words RW.

The post-processing unit P fulfills two purposes: Firstly, it is used to improve the probability distribution of the random bits RB to overcome statistical defects present in the non-deterministic noise source NN. The probability distribution of the resultant random words RW is much closer to a uniform distribution than that of the random bits RB.

Secondly, the post-processing unit P is used to increase the entropy per bit of the sequence of random words RW. The entropy per bit is the quotient of entropy per digitized noise signal to the width of the binary representation of a digitized noise signal. The entropy itself of the random bit RB is a measure for the randomness obtained from the non-deterministic noise source NN. Empirically, the entropy of a random number sequence can only be estimated reliably under certain model assumptions regarding the underlying probability distribution. The entropy per bit is increased in the post-processing unit by using a carefully designed compressing algorithm that collects or "distills" the entropy of a high speed input stream of random bits RB to produce a lower speed stream of random words RW with increased entropy per bit.

As random number generators are used in applications which require high security, it is important to ensure the quality of the random numbers generated by certification. In Germany the certification authority is the "Bundesamt für Sicherheit in der Informationstechnik (BSI)", which provides the guideline "Functionality classes and evaluation methodology for true (physical) random number generators", version 3.1, September 25, 2001, W. Killmann, W. Schindler. In this document random number generators are divided into two functionality classes, P1 and P2. Roughly speaking, the P1 property requires random numbers to be statistically inconspicuous, that is uniformly distributed. The P2 specific requirement should guarantee that the random numbers are practically impossible to determine even if the predecessors or successors are known.

Due to the presence of mathematical post-processing in a random number generator, it is not straight-forward for the certification authority to discriminate between a true random number generator and a pseudo-random number generator.
Pseudo-random number generators are able to pass statistical tests by producing random numbers having a uniform probability distribution without sourcing any entropy.

However, for security applications such as cryptographic keys generation, a uniform probability distribution is not sufficient and the unpredictability of the random numbers is an essential requirement.

In order to guarantee that the random numbers generated are indeed unpredictable and not just uniformly distributed, the above guideline requires - in addition to the requirement that the statistical behavior of the internal random number should be inconspicuous - in P2.c) that:
"the prospects of success for systematic guessing of the external random numbers (realized through systematic exhaustion attacks) - even if the random number sub-sequences are known - should at best be negligibly higher than would be case if the external random number had been generated by an ideal random number generator".
To certify that this is the case P2.d) (vii) states that the sequence of random bits RB, which is called digitized noise signal sequence in the guideline, has "to meet particular criteria or pass statistical tests" and a suite of statistical tests to be fulfilled is provided. By testing the random bits RB before post-processing it can be guaranteed that the random words RW do indeed have entropy as a physical non-deterministic noise source NN is involved in their generation. If the above tests are passed by the random bits RB, one can be certain that the random words RW will not just pass statistical tests by means of pseudo-random behavior.

Unfortunately, it is very difficult to design digitized noise sources DN which can pass the required statistical tests and be used in mobile applications such as smart cards because digitized noise sources DN which can pass the tests require more chip area and consume more power than is desirable for mobile applications. To reduce the chip area and power required for the digitized noise source DN, mobile applications commonly use digitized noise sources DN which produce random bits RB of lesser statistical quality and a post-processing unit P to adjust the statistical quality.

The German certification authority recognizes the fact that the digitized noise source DN of those random number generators will not pass the statistical tests and provides alternative criteria to P2.d) (vii) for testing the quality of the random numbers. The alternative criteria for P2.d)(vii) type 1 states:
"The aim of P2.d)(vii) is to guarantee P2.c) for selected prototypes by verifying a minimum entropy limit for each internal random bit with a negligibly small error probability. If the digitized noise signal sequence does not meet criterion P2.d)(vii), the applicant may alternatively submit the following proof:
   - internal random number sequences pass the statistical tests specified in P2.i)(vii),
   - clear proof that the internal random numbers achieve the goal set with criterion P2.d)(vii). The proof must be provided taking into account the mathematical post-processing and on the basis of the empirical properties of the digitized noise signal sequence."

The internal random numbers referred to are called random words RW in the invention. The proof mentioned at the second point of the alternative criteria type 1:
"can be based on statistical tests of the internal random numbers in as much as their suitability is justified".

In the alternative criteria type 1 random numbers output by the post-processing P are tested instead of random numbers output by the digitized noise source DN. The testing method includes post-processing, so the applicant has to additionally prove that the random numbers after post-processing meet a minimum entropy per bit limit in order to guarantee the unpredictability of the generated numbers.

The object of the invention is to provide a method for testing random number generators and to provide a random number generator in which this method can be used. The testing takes into account the proof required in the second half of the alternative criteria P2.d)(vii) type 1 in the above guideline of the German certification authority.

Accordingly, the invention provides a method for providing a plurality of random words with a random number generator comprising a digitized noise source, a post-processing unit with memory elements and a control unit comprising certification mode operation for testing the quality of the digitized noise source through the steps of providing a stream of random bits by the digitized noise source, setting the post-processing unit to an initial state by means of the control unit, enabling the post-processing unit by means of the control unit, post-processing a predetermined number M of random bits of the stream of random bits to obtain a random word having N bits, outputting the random word for testing purposes and repeating the above steps for producing additional random words.

In a so called certification mode for testing the random number generator according to the alternative criteria P2.d)(vii) type 1 of the above mentioned guideline of the German certification authority, the post-processing unit of the random number generator is reset to an initial state by means of a control unit before the generation of each new random word. The random words are collected and then tested according to the statistical tests specified in P2.i)(vii). In this method the proof required by the alternative criteria P2.d)(vii) type 1, which requires showing that a minimum entropy limit for each internal random bit is met, is based on the following argument: Since the state of the post-processing unit is reset every time a new random word is generated, the post-processing unit cannot store previous random words and therefore the random words generated do not depend on previous random words. In other words, the post-processing unit is stateless and deterministic, meaning that the same input to the post-processor unit will always lead to the same output of random words. The randomness of the output will depend only on the randomness of the number inputted. As a result, the post-processing unit cannot behave as a pseudo-random generator. Therefore, if the statistical tests specified in P2.i)(vii) in the certification procedure are passed by the random words generated, it must be because of the entropy of the noise source, as the post-processing acts not-pseudorandomly in the certification mode. If the noise source is stateless or possesses a limited state space, as is the case for physical non-deterministic noise sources, it is proved that the random numbers generated possess entropy and that the random number generator is not just a pseudo-number generator in case that the certification tests are passed.

In a so called normal mode, the step of setting the post-processing unit to an initial state before the generation of a new random word RW is started is omitted. The random number generator produced true random numbers which can be used in security applications.

Preferably, providing a stream of random bits comprises the steps of providing a non-deterministic noise source outputting an analogue noise signal, sampling the analogue noise signal, and converting the analogue samples into digital values. By using a non-deterministic noise source the random bits will indeed be unpredictable.

Preferably, setting the post-processing unit to an initial state by means of the control unit is achieved by setting all memory elements in the post-processing unit to predetermined states. The state of the post-processing unit is given by the states stored in memory elements of the post-processing unit. If all the memory elements are set to predetermined states, then the post-processing of the random bits will always start from the same initial state. As a result the post-processing unit will always output the same values for the same input and the output will not depend on previous random bits processed. In this way it can be guaranteed that the uniform distribution of the random words is provided by the digitized noise source and that the statistical tests are not just fulfilled by a deterministic, non-random uniform distribution generated by the post-processing unit. The states to which the memory elements are set to are not important, however, the memory elements should always be set to the same states before processing the next random word.

Preferably, all memory elements in the post-processing unit are set to the same predetermined state. Setting all elements to the same predetermined state, such as a logical 1 or 0, is a simple procedure which usually requires no additional hardware. For example, if the post-processing unit contains a shift register all memory elements can be reset to the same value simultaneously.

Preferably, the predetermined number M of post-processed random bits is greater than the number of bits N in a random word. By processing an integral multiple of the number of bits N in a random word each bit in a random word is based on not just on the random information stored in previous random word bits but also on new random information from the digitized random bit source.

Preferably, the predetermined number M of post-processed random bits is less or equal than the number of bits N of a random word. If only one random bit is post-processed, the random word outputted is only dependent on the random bit input, as the post-processing unit is reset to the same state after every random bit is processed. In this way statistical properties of the digitized noise source can be analyzed by using the random word outputted.

Preferably, the step of post-processing comprises generating a lower speed stream of random words with increased statistical quality from a high-speed new random stream of random bits by collecting the entropy of the stream of random bits. By compressing high-speed bits and collecting the entropy in the post-processing unit, the entropy per bit of the random words can be increased. However, the random words will be available at a slower rate than the random bits.

Additionally the post-processing increases the statistical quality by providing random words which are more uniformly distributed. In this way non-deterministic noise sources which require little chip area and consume less power can be used for generating high quality random numbers.

Preferably, the step of post-processing comprises logically combining a random bit with a logical value calculated from bits of previous words stored in memory elements in order to calculate a new bit of a random word. By storing and feeding back logical values from bits of previous random words, the entropy already in those bits can be used to increase the overall entropy of the new random bits.

Preferably, the steps of post-processing comprises using a linear feedback shift register. Linear feedback shift registers can generate long sequences of nearly uniform-distributed data and often have speed and area advantages over functionally equivalent designs.

The invention also provides a random number generator comprising a digitized noise signal generator, which outputs a stream of random bits, the random bits being input into a post-processing unit which outputs a stream of random words, the post-processing unit being connected to a control unit, the control unit having as input a certification mode signal and as output a reset signal connected to the post-processing unit.

The control unit is used to place the random number generator in either one of two modes. In the first mode the random number generator operates like a normal random number generator and generates random numbers. The second mode is a certification mode which is used to prove that the random numbers generated fulfill the requirements set forth in the alternative criteria P2.d)(vii) type 1 test of the above mentioned guideline of the German certification authority.

Preferably, the control unit outputs a reset signal every time a predetermined number M of random bits has been processed by the post-processing unit if the certification mode signal is active, the reset signal resetting the post-processing unit. In this way, the post-processing unit is reset only in the certification mode and only after a predetermined number M of random bits has been processed.

Preferably, the control unit additionally has an input for inputting a compression factor, the compression factor determining the number M of random bits to be processed by the post-processing unit before the post-processing unit is reset by means of the reset signal if the certification mode signal is active. By inputting the compression factor the number of M of random bits can be adapted to the requirements regarding the quality and rate at which the random numbers are provided. If the compression factor is small random words will be provided at a faster rate and with lesser statistical quality than if the compression factor is large.

Preferably, the control unit comprises a counter having as input a compression factor, a clock signal and a load signal and as output a countdown signal, the compression factor determining after how many clock cycles a countdown signal will be output by the counter, the compression factor being loaded as a starting value into the counter by the load signal. The counter is used for controlling the post-processing unit in the certification mode by outputting a reset signal after the number of bits given by the compression factor have been processed. In the normal operating mode no reset signal is output.

Preferably, the post-processing unit comprises a linear feedback shift register with a N bit shift register comprising N memory elements and a feedback network. Linear, feedback shift registers are easy to implement in hardware and are useful for generating pseudo-random bit sequences. The values of the bits stored in the memory elements of the shift register are input into the feedback network and are combined to form feedback bits which are then combined with incoming random bits to form new random bits of the random word. The overall entropy of the random bits increases with each bit fed-in into the register.

Preferably, the memory elements in the shift register are set to predetermined values by the reset signal. The state of the post-processing unit is stored in the memory elements of the shift register. If the memory elements are set to predetermined values before processing the next random word, the post-processing unit always starts from the same state and the bits of the random words calculated do not depend on previous values of random bits.

Preferably, the digitized noise source comprises a non-deterministic noise source supplying an analog noise signal and a digitizer connected to the non-deterministic noise source. The non-deterministic noise source guarantees that the random numbers provided by the digitized noise source will indeed which are unpredictable.

Preferably, the non-deterministic noise source is based on one of a thermal noise in a resistor, a shot noise in a PN-junction and a time jitter in an oscillator. These kinds of non-deterministic noise sources are easy to implement in an integrated circuit environment and produce near random signals.

The invention will now be described in more detail below by way of non-limiting examples and with reference to the accompanying drawings, in which:
- Figure 1: shows a random number generator with a digitized noise source and a post-processing unit,
- Figure 2: shows a block diagram of an embodiment of a random number generator according to the invention,
- Figure 3: shows a block diagram of an embodiment of a post-processing and control unit according to the invention,
- Figure 4: shows a block diagram of an embodiment of a control unit according to the invention, and
- Figure 5: shows a timing diagram for the control unit of the embodiment of the invention shown in figure 4.

Reference is now made to Figure 2, which shows a block diagram of an embodiment of a random number generator according to the invention. A digitized noise source DN provides a stream of random bits RB which are input into a post-processing unit P. The post-processing unit produces a random word RW and is controlled by the control unit C by means of the reset signal RS. The control unit C has as input the certification mode signal CRF, which determines the mode of operation of the random number generator.

In a first mode of operation, the so called normal mode, the random number generator produces a stream of random words RW, similar to prior art random number generators.

The second mode of operation is a certification mode which is used for certifying that the random words RW do not just fulfill statistical tests, but are also unpredictable. This mode is used for proving that the random number generator fulfills the alternative criteria P2.d)(vii) type 1 of the above mentioned guideline of the German certification authority. If the certification mode is selected by means of the certification mode signal CRF, the control unit C resets the post-processing unit P by means of the reset RS before the generation of each new random word RW. Since the post-processing unit P is reset every time before the start of generation of a new random word RW, the post-processing unit P itself cannot behave as a pseudo-random number generator. Consequently, if the statistical tests given in P2.i)(vii) for the random words RW are only passed, then it must be because of the entropy of the digitized noise source DN.

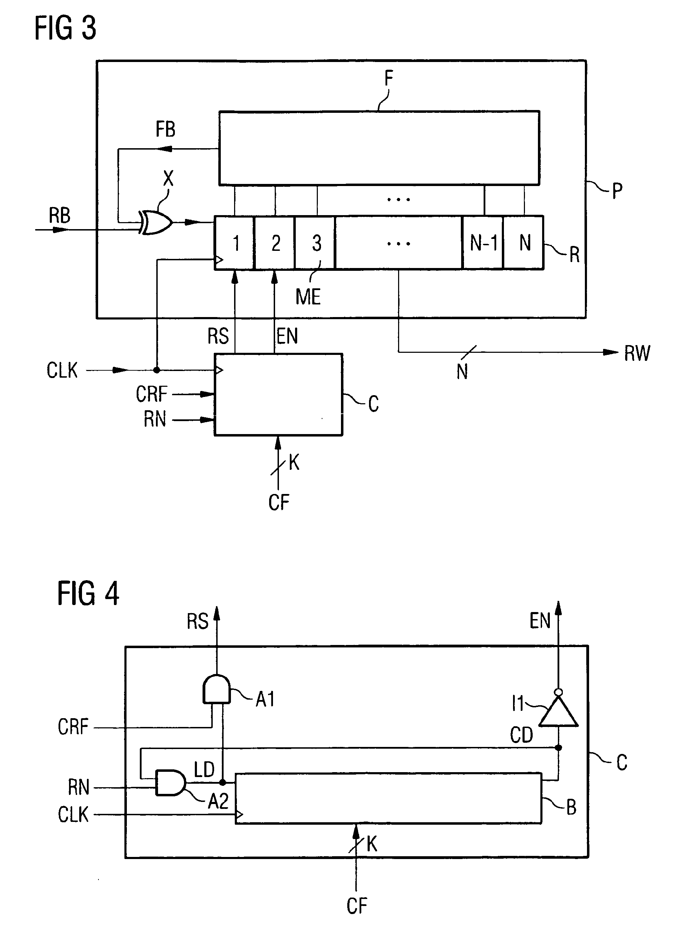

Figure 3 shows an embodiment of the random number generator according to the invention where the post-processing unit P is based on a linear feedback shift register (LFSR). However, the invention can be applied to any kind of digital post-processing device.

The post-processing unit P has as inputs a stream of random bits RB, a clock signal CLK, a reset signal RS and an enable signal EN and outputs an N bit random word RW. The stream of random bits RB may be provided by a digitized noise source DN as shown in Figure 1 and consists of a stream of bits having one of the values 0 and 1. The random bits RB are of low entropy and are provided at a high rate. They serve as seeds' for the post-processing unit P. The post-processing unit P comprises a N bit shift register R connected to a feedback network F and an exclusive-OR gate X.

The shift register R comprises N memory elements ME and may be constructed as a chain of flip-flops. With each clock pulse CLK the bits stored in each memory elements ME are shifted to the neighboring memory element ME to the right and a new incoming bit output by the exclusive-OR gate X is stored in the left-most memory element ME. The shift register R will only shift bits if a high enabling signal EN is applied.

The memory elements ME can be reset to predetermined values by the reset signal RS. The predetermined values stored in the memory elements ME may all have the same value, for example a logical "0" or "1". Alternatively the memory elements ME may be reset to values corresponding to a secret key or a manufacturing identification number. The bits stored in the N memory elements ME together form a word of length N which is output as a random word RW.

The feedback network F uses previous values stored in the memory elements ME as inputs to calculate a feedback bit FB. The XOR-sum of the feedback bit FB with the incoming random bit RB is formed in the exclusive-OR gate X and used as input for the shift register R. Usually not all values stored in the memory elements ME are used in the calculation of the feedback bit FB, which maybe be calculated by means of a primitive feedback polynomial. The polynomial may be chosen so that the sequence of feedback bits FB has the maximum possible length before repeating itself if always the same random bit RB were input. The feedback network F is used to increase the randomness of the bits stored in the memory elements ME so that their probabilities are uniformly distributed.

The control unit C is used to control the shift register R by means of the reset signal RS and the enable signal EN. Inputs to the control unit C are the clock signal CLK, the certification mode signal CRF, a run mode signal RN and a compression factor CF. The run signal RN is used for starting the random number generator.

In the normal mode of operation of the random number generator the memory elements ME of the shift register R are not set to predetermined values before the generation of every random word RW. If the enable signal EN is applied to the shift register R a number M of random bits RB are post-processed before a random word RW is output. The number of M of random bits RB to be processed is determined by the compression factor CF which is input into the control unit C. The entropy of M random bits RB is thus collected and compressed into an N bit random word RW. The normal mode of operation is selected by applying a low certification mode signal CRF to the control unit C.

In certification mode the memory elements ME of the shift register R are set to predetermined values before starting the generation of each random word RW. Then M random bits RB are post-processed and the resultant random word RW is formed. The random words RW are outputted, collected and tested according to the statistical tests in P2.i)(vii) of the guideline of the German certification authority. Because the feedback network F always starts with the same values after a reset of the shift register R the post-processing unit P cannot work as a pseudo-random number generator.

The compression factor CF depends on the size N of the random word RW and the amount of compression desired. For example, if the memory elements ME of the shift register R are filled a total of 4 times before outputting a random word RW of length N = 32, then the compression factor would be 4 x 32 = 128. In other words 128 random bits RB are used to create a 32 bit random word RW. The compression factor CF corresponds to the number M of random bits RB post-processed before a random word RW is output.

Figure 4 shows an embodiment of the control unit C comprising a counter B, logic gates A1, A2 and an inverter I1. The counter B is preloaded with the compression factor CF when the load signal LD is applied to its input. The compression factor CF is input by using K bit lines. For a binary representation and a compression factor CF = 128 the number of bit lines K = 7.

The counter B is decremented with every clock cycle CLK. As long as the counter B has not counted M clock cycles CLK the countdown signal CD is low and inverted by the inverter I1 to produce a high enable signal EN which allows operation of the shift register R. Once the counter B has counted M clock cycles CLK the countdown signal CD will be high, the enable signal EN low and the load signal LD high.

The load signal LD and the certification mode signal CRF are input into the AND gate A1. In the certification mode the certification mode signal CRF is high and together with the high load signal LD a reset signal RS is produced for resetting the shift register R. In the normal operating mode the certification mode signal CRF is low and no reset signal RS will be output.

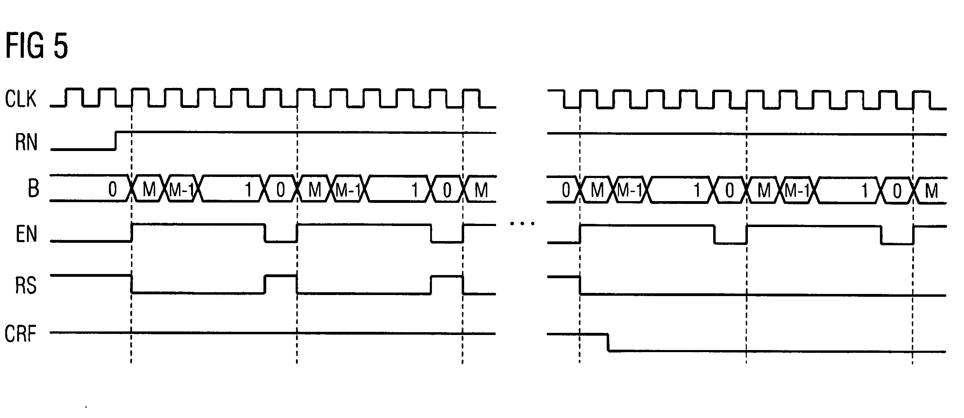

Figure 5 shows a timing diagram for the control unit with the clock signal CLK, the run signal RN, the count values of the counter B, the enable signal EN, the reset signal RS and the certification mode signal CRF. As can be seen from the certification mode signal CRF, the left-hand side of the timing diagram shows the operation of the random number generator in the certification mode while the right half of the diagram shows the normal operation mode. A clock signal CLK is applied to the control unit C and the counter B is loaded with the number M of random bits RB that are to be compressed into a random word RW once the run signal RN is high. While the counter B has not reached the count zero, the enable signal EN is high and the reset signal RS is low. Once the counter has completed counting M clock cycles CLK have been counted, the enable signal EN assumes a low state and prevents the shift register R from shifting bits, while the reset signal RS is high and the shift register R is reset to predetermined values. In contrast to the certification mode, no high reset signal RS is output in the normal mode and the shift register is not reset. As a result the values stored in the memory cells ME of shift register R also contain the entropy of the previous of the random words RW and their entropy is increased.

It will apparent to those skilled in the art that various modifications and variations can be made of the random number generator presented and the method of operating such a random number generator of the present invention. In view of the foregoing, it is intended that the present invention covers modifications and variations of this invention provided they fall within the scope of the following claims.

### Reference signs

- A1, A2: AND gates
- AN: analog noise signal
- B: counter
- C: control unit
- CD: countdown signal
- CF: compression factor
- CLK: clock signal
- CRF: certification mode signal
- D: digitizer
- DN: digitized noise source
- EN: enable signal
- F: feedback network
- FB: feedback bit
- I1: inverter
- K: number of bits for compression factor
- LD: load signal
- M: number of random bits RB compressed
- ME: memory element
- N: no. of bits in random word RW and shift register R
- NN: non-deterministic noise source
- P: post-processing unit
- R: shift register
- RB: random bit
- RN: run signal
- RS: reset signal
- RW: random word
- X: exclusive-OR gate

## Claims

1. A method for providing a plurality of random words with a random number generator comprising a digitized noise source (DN), a post-processing unit (P) with memory elements (ME) and a control unit (C), **characterized in that** it comprises a certification mode operation for testing the quality of the digitized noise source with the steps of
- providing a stream of random bits (RB) by the digitized noise source (DN),
- setting the post-processing unit (P) to an initial state by means of the control unit (C),
- enabling the post-processing unit (P) by means of the control unit (C),
- post-processing a predetermined number M of random bits (RB) of the stream of random bits (RB) to obtain a random word (RW) having N bits,
- outputting the random word (RW) for testing purposes,
- repeating the above steps for producing additional random words.

2. A method according to claim 1, wherein providing a stream of random bits (RB) comprises the steps of
- providing a non-deterministic noise source (NN) outputting an analog noise signal (AN),
- sampling the analog noise signal (AN),
- converting the analog samples into random bits (RB).

3. A method according to claims 1 or 2, wherein setting the post-processing unit (P) to an initial state by means of the control unit (C) is achieved by setting all memory elements (ME) in the post-processing unit (P) to predetermined states.

4. A method according to claim 3, wherein all memory elements (ME) in the post-processing unit (P) are set to the same predetermined state.

5. A method according to claim 1, wherein the predetermined number M of post-processed random bits (RB) is greater than the number of bits N of a random word (RW).

6. A method according to claim 1, wherein the predetermined number M of post-processed random bits (RB) is less than or equal to the number of bits N of a random word (RW).

7. A method according to one of the claims 1 to 3, further comprising a normal mode of the random number generator wherein a step of post-processing comprises logically combining a random bit (RB) with a logical value calculated from bits of previous random words (RW) stored in memory elements (ME) in order to calculate a new bit of a new random word (RW).

8. A method according to claim 7, wherein the step of post-processing comprises using a linear feedback shift register.

9. A random number generator comprising a digitized noise source (DN), which outputs a stream of random bits (RB), the random bits (RB) being input into a post-processing unit (P), also comprised in the random number generator which outputs a stream of random words (RW),
**characterized in that** the post-processing unit (P) being connected to a control unit (C), the control unit (C) having as input a certification mode signal (CRF) and as output a reset signal (RS) connected to the post-processing unit (P), wherein the control unit (C) outputs a reset signal (RS) every time a predetermined number M of random bits (RB) have been processed by the post-processing unit (P) if the certification mode signal (CRF) is active, the reset signal (RS) resetting the post-processing unit (P).

10. A random number generator according to claim 9, wherein the control unit (C) additionally has an input for inputting a compression factor (CF), the compression factor (CF) determining the number M of random bits (RB) to be processed by the post-processing unit (P) before the post-processing unit (P) is reset by means of the reset signal (RS) if the certification mode signal (CRF) is active.

11. A random number generator according to one of the claims 9 or 10, wherein the control unit (C) comprises a counter (B) having as input a compression factor (CF), a clock signal (CLK) and a load signal (LD) and as output a count down signal (CD), the compression factor (CF) determining after how many clock cycles (CLK) a count down signal (CD) will be output by the counter (B), the compression factor (CF) being loaded as a starting value into the counter (B) by the load signal (LD).

12. A random number generator according to one of the claims 9 to 11, wherein the post-processing unit (P) comprises a linear feedback shift register with a N-bit shift register (R) comprising N with memory elements (ME) and a feedback network (F).

13. A random number generator according to claim 12, wherein the memory elements (ME) in the shift resister (R) are set to predetermined values by the reset signal (RS).

14. A random number generator according to one of the claims 9 to 13, wherein the digitized noise source (DN) comprises a non-deterministic noise source (NN) supplying an analog noise signal (AN) and a digitizer (D) connected to the non-deterministic noise source (NN).

15. A random number generator according to claim 14, wherein the non-deterministic noise source (NN) is based on one of a thermal noise in a resistor, a shot noise in a PN-junction and a time jitter in an oscillator.

## Patentansprüche

1. Verfahren zum Bereitstellen einer Vielzahl von Zufallswörtern mit einem Zufallszahlengenerator, der eine digitalisierte Rauschquelle (DN), eine Nachverarbeitungseinheit (P) mit Speicherelementen (ME) und eine Steuereinheit (C) umfaßt, **dadurch gekennzeichnet, daß** es eine Zertifizierungsmodusoperation zum Testen der Qualität der digitalisierten Rauschquelle umfaßt, mit den folgenden Schritten:
- Bereitstellen eines Stroms von Zufallsbit (RB) durch die digitalisierte Rauschquelle (DN),
- Versetzen der Nachverarbeitungseinheit (P) in einen Anfangszustand mittels der Steuereinheit (C),
- Freigeben der Nachverarbeitungseinheit (P) mittels der Steuereinheit (C),
- Nachverarbeiten einer vorbestimmten Anzahl M von Zufallsbit (RB) des Stroms von Zufallsbit (RB), um ein Zufallswort (RW) mit N Bit zu erhalten,
- Ausgeben des Zufallsworts (RW) für Testzwecke,
- Wiederholen der obigen Schritte zum Produzieren zusätzlicher Zufallswörter.

2. Verfahren nach Anspruch 1, wobei das Bereitstellen eines Stroms von Zufallsbit (RB) die folgenden Schritte umfaßt:
- Bereitstellen einer nichtdeterministischen Rauschquelle (NN), die ein analoges Rauschsignal (AN) ausgibt,
- Abtasten des analogen Rauschsignals (AN),
- Umsetzen der analogen Abtastwerte in Zufallsbit (RB).

3. Verfahren nach Anspruch 1 oder 2, wobei das Versetzen der Nachverarbeitungseinheit (P) in einen Anfangszustand mittels der Steuereinheit (C) durch Versetzen aller Speicherelemente (ME) in der Nachverarbeitungseinheit (P) in vorbestimmte Zustände erzielt wird.

4. Verfahren nach Anspruch 3, wobei alle Speicherelemente (ME) in der Nachverarbeitungseinheit (P) in denselben vorbestimmten Zustand versetzt werden.

5. Verfahren nach Anspruch 1, wobei die vorbestimmte Anzahl M von nachverarbeiteten Zufallsbit (RB) größer als die Anzahl der Bit N eines Zufallsworts (RW) ist.

6. Verfahren nach Anspruch 1, wobei die vorbestimmte Anzahl M von nachverarbeiteten Zufallsbit (RB) kleiner oder gleich der Anzahl von Bit N eines Zufallsworts (RW) ist.

7. Verfahren nach einem der Ansprüche 1 bis 3, ferner umfassend einen Normalmodus des Zufallszahlengenerators, wobei ein Schritt des Nachverarbeitens umfaßt, ein Zufallsbit (RB) logisch mit einem logischen wert, der aus Bit vorheriger Zufallswörter (RW), die in den Speicherelementen (ME) gespeichert wurden, berechnet wurde, zu verknüpfen, um ein neues Bit eines neuen Zufallsworts (RW) zu berechnen.

8. Verfahren nach Anspruch 7, wobei der Schritt des Nachverarbeitens umfaßt, ein Linearrückkopplungsschieberegister zu verwenden.

9. Zufallszahlengenerator mit einer digitalisierten Rauschquelle (DN), die einen Strom von Zufallsbit (RB) ausgibt, wobei die Zufallsbit (RB) in eine auch in dem Zufallszahlengenerator enthaltene Nachverarbeitungseinheit (P) eingegeben werden, die einen Strom von Zufallswörtern (RW) ausgibt, **dadurch gekennzeichnet, daß** die Nachverarbeitungseinheit (P) mit einer Steuereinheit (C) verbunden ist, wobei die Steuereinheit (C) als Eingabe ein Zertifizierungsmodussignal (CRF) und als Ausgabe ein Rücksetzsignal (RS) aufweist, das mit der Nachverarbeitungseinheit (P) verbunden ist, wobei die Steuereinheit (C) jedesmal dann, wenn eine vorbestimmte Anzahl M von Zufallsbit (RB) durch die Nachverarbeitungseinheit (P) verarbeitet wurde, ein Rücksetzsignal (RS) ausgibt, wenn das Zertifizierungsmodussignal (CRF) aktiv ist, wobei das Rücksetzsignal (RS) die Nachverarbeitungseinheit (P) zurücksetzt.

10. Zufallszahlengenerator nach Anspruch 9, wobei die Steuereinheit (C) zusätzlich einen Eingang zum Eingeben eines Komprimierungsfaktors (CF) aufweist, wobei der Komprimierungsfaktor (CF) die Anzahl M von Zufallsbit (RB) bestimmt, die durch die Nachverarbeitungseinheit (P) zu verarbeiten ist, bevor die Nachverarbeitungseinheit (P) mittels des Rücksetzsignals (RS) zurückgesetzt wird, wenn das Zertifizierungsmodussignal (CRF) aktiv ist.

11. Zufallszahlengenerator nach einem der Ansprüche 9 oder 10, wobei die Steuereinheit (C) einen Zähler (B) mit einem Komprimierungsfaktor (CF), einem Taktsignal (CLK) und einem Ladesignal (LD) als Eingabe und einem Countdown-Signal (CD) als Ausgabe umfaßt, wobei der Komprimierungsfaktor (CF) bestimmt, nach wievielen Taktzyklen (CLK) der Zähler (B) ein Countdown-Signal (CD) ausgibt, wobei der Komprimierungsfaktor (CF) als Startwert durch das Ladesignal (LD) in dem Zähler (B) geladen wird.

12. Zufallszahlengenerator nach einem der Ansprüche 9 bis 11, wobei die Nachverarbeitungseinheit (P) ein Linearrückkopplungsschieberegister mit einem N-Bit-Schieberegister (R) umfaßt, das N Speicherelemente (ME) und ein Rückkopplungsnetzwerk (F) umfaßt.

13. Zufallszahlengenerator nach Anspruch 12, wobei die Speicherelemente (ME) in dem Schieberegister (R) durch das Rücksetzsignal (RS) auf vorbestimmte Werte gesetzt werden.

14. Zufallszahlengenerator nach einem der Ansprüche 9 bis 13, wobei die digitalisierte Rauschquelle (DN) eine nichtdeterministische Rauschquelle (NN), die ein analoges Rauschsignal (AN) liefert, und einen mit der nichtdeterministischen Rauschquelle (NN) verbundenen Digitalisierer (D) umfaßt.

15. Zufallszahlengenerator nach Anspruch 14, wobei die nichtdeterministische Rauschquelle (NN) auf einem thermischen Rauschen in einem Widerstand, einem Schrotrauschen in einem PN-Übergang oder einem Zeit-Jitter in einem Oszillator.

## Revendications

1. Procédé pour fournir une pluralité de mots aléatoires au moyen d'un générateur de nombres aléatoires comprenant une source de bruit numérisé (DN), une unité de post-traitement (P) avec des éléments de mémoire (ME) et une unité de commande (C), **caractérisé en ce qu'**il comprend un fonctionnement en mode de certification pour tester la qualité de la source de bruit numérisé avec les étapes de :
- fourniture d'un flux de bits aléatoires (RB) par la source de bruit numérisé (DN),
- réglage de l'unité de post-traitement (P) dans un état initial par l'unité de commande (C),
- activation de l'unité de post-traitement (P) au moyen de l'unité de commande (C),
- post-traitement d'un nombre M déterminé à l'avance de bits aléatoires (RB) du flux de bits aléatoires (RB) pour obtenir un mot aléatoire (RW) à N bits,
- fourniture en sortie du mot aléatoire (RW) à des fins de test,
- répétition des étapes ci-dessus pour produire des mots aléatoires supplémentaires.

2. Procédé suivant la revendication 1, dans lequel la fourniture d'un flux de bits aléatoires (RB) comprend les étapes de
- fourniture d'une source de bruit non déterministe (NN) fournissant en sortie un signal de bruit analogique (AN),
- échantillonnage du signal de bruit analogique (AN) ,
- conversion des échantillons analogiques en des bits aléatoires (RB).

3. Procédé suivant la revendication 1 ou 2, dans lequel le réglage de l'unité de post-traitement (P) dans un état initial au moyen de l'unité de commande (C) est effectué en réglant tous les éléments de mémoire (ME) dans l'unité de post-traitement (P) dans des états déterminés à l'avance.

4. Procédé suivant la revendication 3, dans lequel tous les éléments de mémoire (ME) dans l'unité de post-traitement (P) sont réglés dans le même état déterminé à l'avance.

5. Procédé suivant la revendication 1, dans lequel le nombre M déterminé à l'avance de bits aléatoires post-traités (RB) est supérieur au nombre de bits N d'un mot aléatoire (RW).

6. Procédé suivant la revendication 1, dans lequel le nombre M déterminé à l'avance de bits aléatoires post-traités (RB) est inférieur ou égal au nombre de bits N d'un mot aléatoire (RW).

7. Procédé suivant l'une des revendications 1 à 3, comprenant en outre un mode de fonctionnement normal du générateur de nombres aléatoires dans lequel une étape de post-traitement comprend la combinaison logique d'un bit aléatoire (RB) avec une valeur logique calculée à partir de bits de mots aléatoires précédents (RW) mémorisés dans des éléments de mémoire (ME) afin de calculer un nouveau bit d'un nouveau mot aléatoire (RW).

8. Procédé suivant la revendication 7, dans lequel l'étape de post-traitement comprend l'utilisation d'un registre à décalage à contre-réaction linéaire.

9. Générateur de nombres aléatoires comprenant une source de bruit numérisé (DN) qui délivre un flux de bits aléatoires (RB), les bits aléatoires (RB) étant fournis en entrée à une unité de post-traitement (P), également présente dans le générateur de nombres aléatoires, qui fournit en sortie un flux de mots aléatoires (RW), **caractérisé en ce que** l'unité de post-traitement (P) est connectée à une unité de commande (C), l'unité de commande (C) recevant en entrée un signal de mode de certification (CRF) et fournissant en sortie un signal de réinitialisation (RS) connecté à l'unité de post-traitement (P), dans lequel l'unité de commande (C) délivre un signal de réinitialisation (RS) chaque fois qu'un nombre (M) déterminé à l'avance de bits aléatoires (RB) ont été traités par l'unité de post-traitement (P) si le signal de mode de certification (CRF) est actif, le signal de réinitialisation (RS) réinitialisant l'unité de post-traitement (P).

10. Générateur de nombres aléatoires suivant la revendication 9, dans lequel l'unité de commande (C) a en outre une entrée pour fournir en entrée un facteur de compression (CF), le facteur de compression (CF) déterminant le nombre M de bits aléatoires (RB) devant être traités par l'unité de post-traitement (P) avant que l'unité de post-traitement (P) soit réinitialisée au moyen du signal de réinitialisation (RS) si le signal de mode de certification (CRF) est actif.

11. Générateur de nombres aléatoires suivant l'une des revendications 9 ou 10, dans lequel l'unité de commande (C) comprend un compteur (B) recevant en entrée un facteur de compression (CF), un signal d'horloge (CLK) et un signal de chargement (LD) et fournissant en sortie un signal de compte à rebours (CD), le facteur de compression (CF) déterminant au bout de combien de cycles d'horloge (CLK) un signal de compte à rebours (CD) sera délivré par le compteur (B), le facteur de compression (CF) étant chargé en tant que valeur de départ dans le compteur (B) par le signal de chargement (LD).

12. Générateur de nombres aléatoires suivant l'une des revendications 9 à 11, dans lequel l'unité de post-traitement (P) comprend un registre à décalage à contre-réaction linéaire comportant un registre à décalage à N bits (R) comprenant N éléments de mémoire (ME) et un réseau de contre-réaction (F).

13. Générateur de nombres aléatoires suivant la revendication 12, dans lequel les éléments de mémoire (ME) du registre à décalage (R) sont réglés à des valeurs déterminées à l'avance par le signal de réinitialisation (RS).

14. Générateur de nombres aléatoires suivant l'une des revendications 9 à 13, dans lequel la source de bruit numérisé, dans lequel la source de bruit numérisé (DN) comprend une source de bruit non déterministe (NN) délivrant un signal de bruit analogique (AN) et un numériseur (D) connecté à la source de bruit non déterministe (NN).

15. Générateur de nombres aléatoires suivant la revendication 14, dans lequel la source de bruit non déterministe (NN) est basée sur l'un d'un bruit thermique dans une résistance, d'un bruit de grenaille dans une jonction PN et d'une gigue temporelle dans un oscillateur.
